Europäisches Patentamt

**European Patent Office**

**Office européen des brevets**

(19)

(11) Numéro de publication: **0 084 994**
A2

(12) **DEMANDE DE BREVET EUROPEEN**

(21) Numéro de dépôt: **83400092.9**

(22) Date de dépôt: **14.01.83**

(51) Int. Cl.³: **H 01 J 47/06,** G 01 T 1/29

(30) Priorité: **25.01.82 FR 8201092**

(43) Date de publication de la demande: **03.08.83**
**Bulletin 83/31**

(84) Etats contractants désignés: **AT CH DE GB IT LI NL**

(71) Demandeur: **Bras, Serge, 19, rue du Picuré,**
**F-91330 Yerres (FR)**

(72) Inventeur: **Bras, Serge, 19, rue du Picuré, F-91330 Yerres**
**(FR)**

(74) Mandataire: **Jolly, Jean-Pierre et al, Cabinet BROT et**
**JOLLY 83, rue d'Amsterdam, F-75008 Paris (FR)**

(54) **Détecteur pour la localisation d'un rayonnement électromagnétique et dispositif de traitement des signaux fournis par ledit détecteur.**

(57) L'invention concerne un détecteur à localisation de rayonnement électromagnétique.

Le détecteur comprend deux supports isolants (44, 46) en forme de demi-cylindres, pourvus sur leur paroi cylindrique d'un filetage de faible pas, lesdits supports étant fixés par leurs extrémités sur une carcasse de montage (40) qui les maintient écartés et parallèles, avec leur paroi cylindrique tournée vers l'extérieur, un fil de cathode (60) étant bobiné autour du filetage desdits supports et un fil d'anode étant tendu à l'intérieur du bobinage, entre deux bornes portées par la carcasse.

Application à l'analyse des structures atomiques en cristallographie, en métallurgie et en chimie biologique.

ACTORUM AG

0084994

Détecteur pour la localisation d'un rayonnement
électromagnétique et dispositif de traitement des
signaux fournis par ledit détecteur.

La présente invention se rapporte à un détecteur destiné à localiser le point d'impact d'un rayonnement électromagnétique.

La diffraction des rayons X, utilisée pour l'analyse des structures atomiques en cristallographie, en métallurgie et en chimie biologique, utilise la répartition dans l'espace du rayonnement secondaire issu de l'échantillon.

Il s'agit donc de mesurer l'intensité d'un rayonnement en un point en fonction de sa position.

La méthode habituellement employée utilise un détecteur ponctuel, et l'on enregistre le nombre de photons X qu'il détecte au cours de son déplacement.

Il est également possible de se servir d'un détecteur sensible sur une certaine surface et d'enregistrer le nombre de photons reçus simultanément aux différents points de cette surface : c'est ce que réalise la plaque photographique, mais son rendement est médiocre.

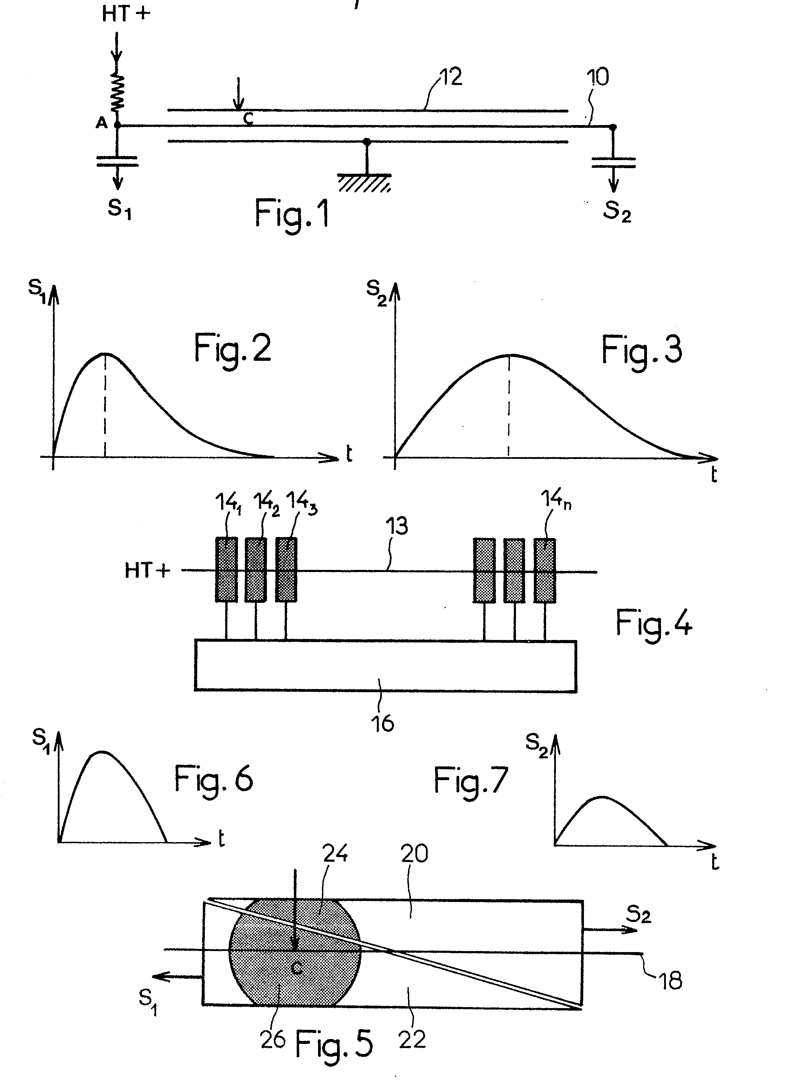

On connaît également des compteurs proportionnels à gaz qui permettent de compter chaque photon individuellement et de localiser sa position. Les compteurs à localisation actuels les mieux au point sont unidimensionnels et sont sensibles sur une bande étroite rectiligne d'une longueur de 50 mm environ. Un tel compteur a été réalisé pour la première fois par BORKOWSKI et KOPP (Rev. Sci. Instrum. n° 39, page 1515, 1968). Comme le montre schématiquement la figure 1, ce compteur comporte un fil résistant 10 en quartz relié à la borne positive d'une source haute tension. Ce fil, qui sert d'anode, est recouvert d'une couche de carbone.

On réalise ainsi une ligne résistance-capacité à constante répartie 12. La localisation du point d'impact du photon sur cette ligne est obtenue en mesurant les temps de montée des signaux $S_1$ et $S_2$ qui en résultent et qui sont recueillis aux extrémités A et B du fil 10. Ainsi, dans le cas où l'impact est en un point C plus proche de l'extrémité A que de l'extrémité B, les signaux $S_1$ et $S_2$ auront l'allure représentée sur les figures 2 et 3 : le temps de montée du signal $S_1$ est très faible et celui du signal $S_2$ est plus long. En réalisant une mise en forme des signaux par double différentiation on obtient l'information sur la position du rayonnement détecté, comme on l'expliquera en détail par la suite.

Ce compteur, qui a l'avantage d'une grande simplicité, est par contre très fragile car la couche de carbone peut être facilement détruite si elle est exposée à un faisceau intense de rayonnement X. Ce compteur est donc à la merci d'une fausse manipulation.

D'autres compteurs ont depuis, été inventés, et ils tendent tous à utiliser un fil d'anode métallique, donc très robuste et, au lieu d'utiliser directement le signal reçu sur l'anode, ils utilisent l'influence électrostatique créée sur une cathode par la charge développée par avalanche au voisinage de l'anode. Dans ce type de compteur, on peut citer le détecteur à ligne à retard de GABRIEL illustré schématiquement à la figure 4. Ce compteur est constitué par un fil central d'anode 13 en métal, par exemple en tungstène doré porté à un potentiel élevé. La cathode située de part et d'autre du fil 13 est à un potentiel nul. Elle est constituée par une cellule en plexiglass dont le fond est divisé en bandes parallèles $14_1$, $14_2$... $14_n$ électriquement conductrices. Chacune desdites bandes est reliée à une ligne à constantes réparties 16 également fragmentée. Un flux gazeux d'argon et de méthane traverse la cellule. Ce détecteur présente comme avantages, une bonne robustesse due à son fil d'anode métallique, une rapidité de comptage résultant de la faible constante de temps de ligne 16 et une bonne linéarité. Cependant, la courbe de réponse est parsemée d'accidents qui sont dus aux réflexions parasites à chaque prise de connexion sur une cathode. Cet inconvénient rend le détecteur difficilement utilisable et c'est pourquoi il n'a pas été industrialisé.

On connaît enfin le détecteur à jeu de JACQUET. Ce détecteur comporte toujours un fil d'anode 18, mais sa cathode est constituée par deux pièces 20, 22 en forme de triangles rectangles, disposés en contact selon leurs hypothénuses, comme le montre la figure 5. Un photon tombant au point C de l'anode influence, sur les demi-cathodes 20, 22, les zones grisées 24, 26 dont les surfaces dépendent bien entendu de la position de C par rapport aux extrémités de l'anode. Les signaux $S_1$ et $S_2$ recueillis sur les demi-cathodes ont les allures représentées sur les figures 6 et 7. On constate qu'ils ont la même forme mais des amplitudes différentes. Cette variation d'amplitude dépend de la surface influencée. On a ainsi un moyen de localiser le point d'impact C.

Ce compteur est robuste et a une courbe de réponse très plate ainsi qu'une bonne linéarité, mais son taux de comptage est limité du fait de son principe. En effet, la mesure de l'amplitude pour un photon X peut être entachée d'une erreur par la présence d'un autre photon X arrivé quelques instants plus tôt ou plus tard.

La présente invention a pour objet de remédier aux inconvénients susmentionnés des compteurs de la technique antérieure signalée et propose à cet effet un compteur à localisation de rayonnement qui se caractérise en ce qu'il comporte essentiellement au moins un fil d'anode entouré par une cathode résistive, de forme appropriée, l'ensemble étant plongé dans une atmosphère gazeuse qui constitue l'élément détecteur de rayonnement.

Selon un mode de réalisation avantageux de l'invention, la cathode est constituée par un bobinage en fil résistant métallique, qui est traversé axialement par le fil d'anode. Ainsi, le fil de cathode et la capacité constituée par le blindage qui l'entoure constituent un capteur à constante répartie.

Le fil est choisi avec un très faible diamètre par rapport au pas du bobinage, afin qu'il n'absorbe qu'une partie négligeable du rayonnement incident.

Grâce à un tel agencement, tout le signal qui est développé par influence sur la cathode est disponible pour déterminer la localisation, puisque la cathode voit le fil d'anode sous l'angle solide total. Au contraire dans les détecteurs connus précédemment signalés, qui se servent de la cathode comme capteur, seule une faible fraction du signal d'influence créé au voisinage du fil d'anode, est disponible pour déterminer la localisation. Cette fraction correspond à l'angle solide sous lequel le capteur voit le fil d'anode.

Dans un mode de réalisation pratique, le détecteur selon l'invention comprend deux supports en forme de demi-cylindres, pourvus sur leur paroi cylindrique d'un filetage de pas correspondant à celui désiré pour le bobinage, lesdits supports étant fixés par leurs extrémités sur une carcasse de montage qui les maintient écartés et parallèles, avec leur paroi cylindrique tournée vers l'extérieur, le fil de cathode étant bobiné autour du filetage desdits supports et le fil d'anode étant tendu à l'intérieur du bobinage entre deux bornes portées par la carcasse.

Les supports sont réalisés à partir d'une unique tige cylindrique sur laquelle on a exécuté un filetage de pas égal à celui désiré pour le bobinage et que l'on a coupée en deux selon un plan diamétral. On obtient de cette manière un espacement régulier des spires du bobinage.

Selon un autre mode de réalisation de l'invention, la cathode est constituée par une surface tubulaire résistive, à l'intérieur de laquelle passe axialement le fil d'anode.

Selon une autre caractéristique de l'invention, le détecteur permet de corriger une erreur de linéarité de la courbe de réponse, ou d'obtenir une courbe de réponse désirée. Pour obtenir ces résultats, on peut, selon un premier procédé, faire varier la capacité répartie le long du détecteur, par exemple en donnant au blindage une forme courbe. Selon un second procédé, on réalise un bobinage à pas variable. On peut également faire varier la résistance de la couche conductrice de la cathode, dans le cas où celle-ci est constituée par une couche.

Le principe de l'invention peut être utilisé pour la réalisation d'un détecteur bi-dimensionnel. Dans un mode de réalisation particulier, un tel détecteur comprend deux cathodes bobinées, disposées à 90° l'une par rapport à l'autre et emboîtées l'une dans l'autre, une nappe de fils d'anodes étant placée à l'intérieur du bobinage intérieur. On recueille les signaux correspondant aux deux dimensions aux bornes des cathodes.

Selon un second mode de réalisation, le détecteur bi-dimensionnel comprend une cathode bobinée dans laquelle est emboîtée perpendiculairement une anode également bobinée selon une structure aplatie et portée au potentiel positif de la haute tension. Le photon est repéré suivant un axe par la cathode et suivant l'autre axe par l'anode.

On peut encore réaliser un détecteur bi-dimensionnel en utilisant deux cathodes élémentaires superposées et orientées perpendiculairement l'une par rapport à l'autre, chacune d'elles recevant une nappe de fils d'anodes.

L'invention sera mieux comprise à la lecture de la description qui va suivre de plusieurs modes de réalisation du détecteur, donnés à titre d'exemples non limitatifs en regard des dessins annexés dans lesquels :

La figure 1 est une représentation schématique du détecteur de BORKOWSKI et KOPP ;

Les figures 2 et 3 montrent les signaux recueillis aux extrémités du fil d'anode de ce détecteur ;

La figure 4 est le schéma du détecteur à ligne à retard de GABRIEL ;

La figure 5 représente schématiquement le détecteur à jeu de JACQUET ;

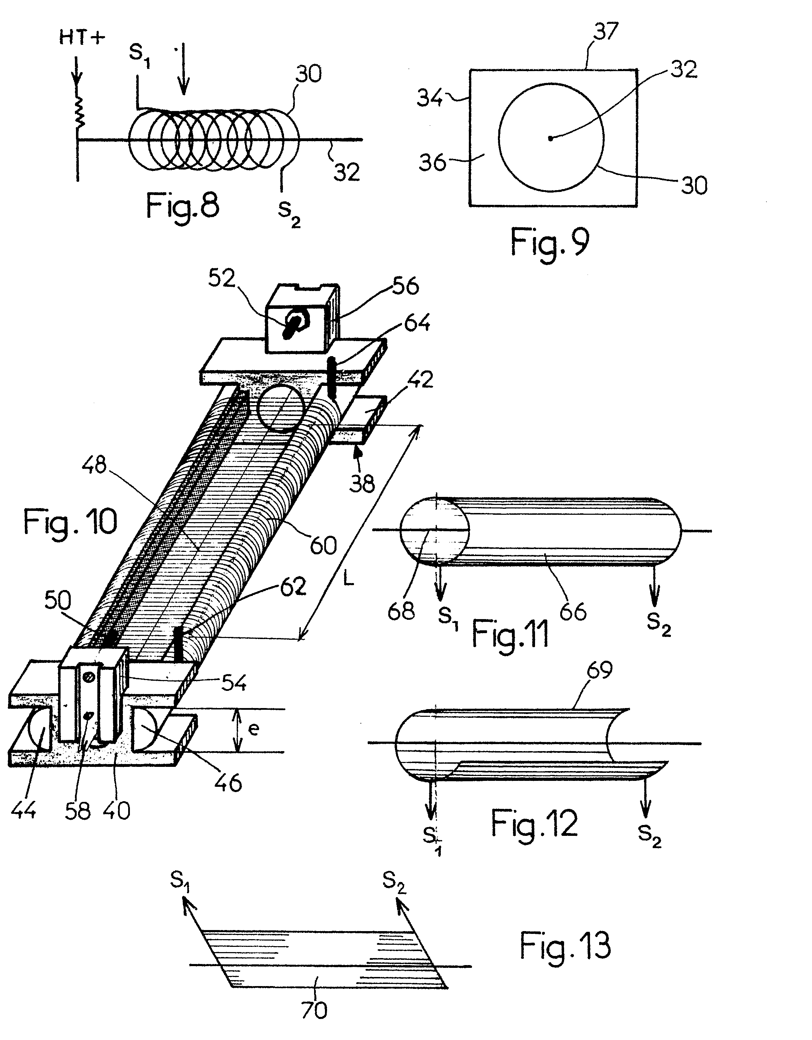

Les figures 6 et 7 montrent les signaux fournis par ce détecteur ;

La figure 8 est une vue schématique du bobinage du détecteur selon l'invention ;

La figure 9 est une vue en bout schématique du détecteur ;

La figure 10 est une vue en perspective de la cellule de détection selon l'invention ;

La figure 11 représente schématiquement une cathode tubulaire ;

La figure 12 représente schématiquement une cathode en forme de portion de tube ;

La figure 13 montre une cellule à cathode plane ;

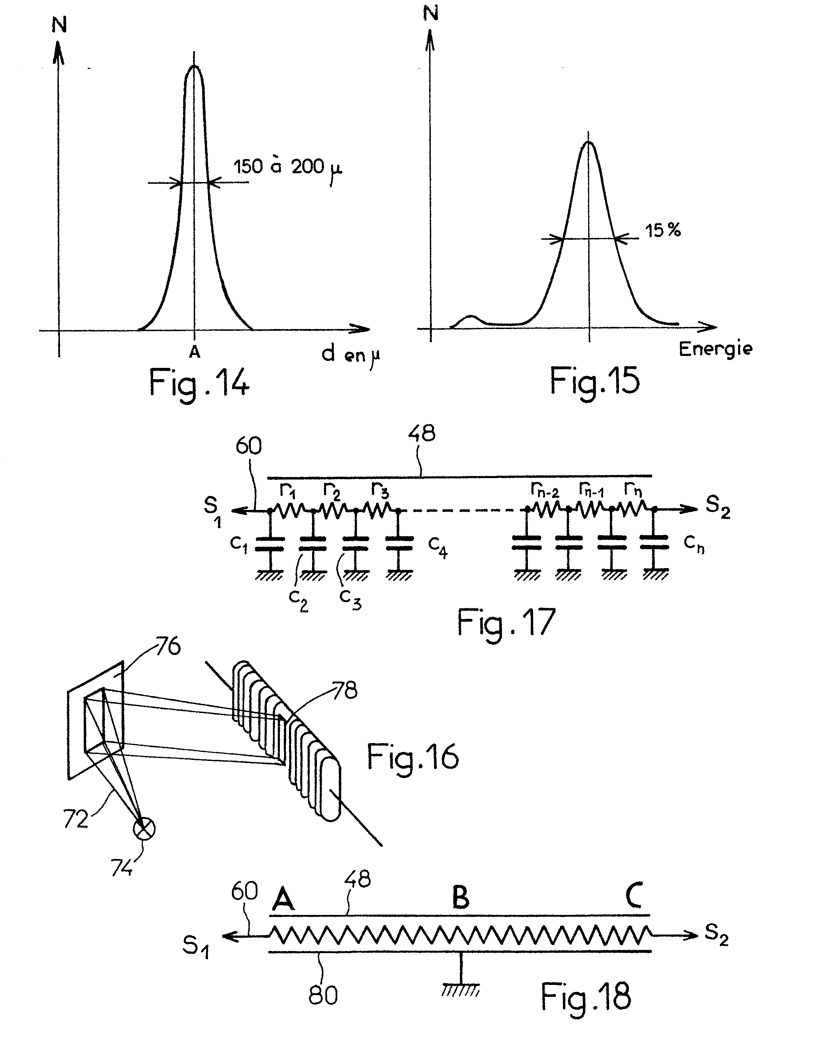

La figure 14 montre un diagramme de résolution spaciale obtenu avec une cellule à cathode bobinée ;

La figure 15 montre un diagramme de résolution énergétique obtenu avec une cellule à cathode tubulaire ;

La figure 16 représente schématiquement un montage pratique pour la détection d'un faisceau de rayons X diffracté sur un échantillon ;

Les figures 17 et 18 représentent les circuits électriques équivalents à la cellule selon l'invention ;

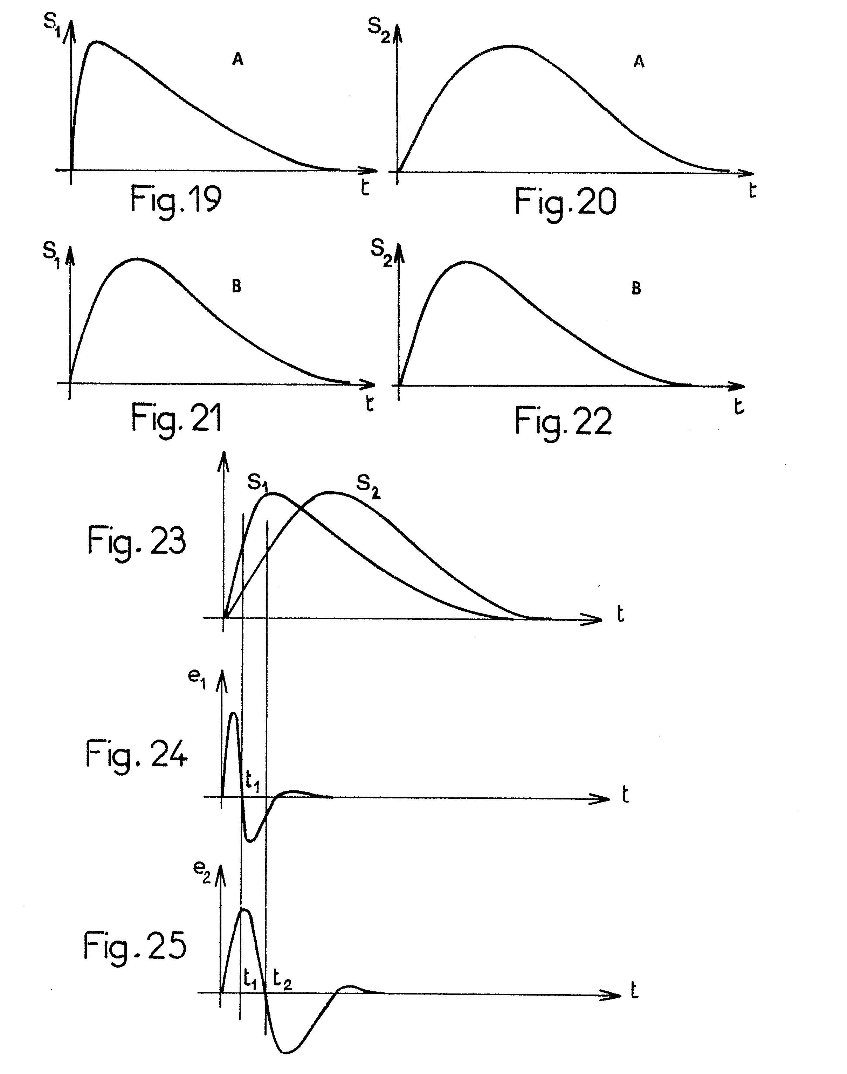

Les figures 19 et 20 montrent les signaux recueillis aux extrémités du fil de cathode lorsqu'un photon tombe sur l'une desdites extrémités ;

Les figures 21 et 22 montrent les signaux recueillis aux extrémités du fil de cathode lorsqu'un photon tombe sensiblement au milieu de la cathode ;

Les figures 23 à 25 illustrent le procédé de détermination du point d'impact du photon sur la cathode ;

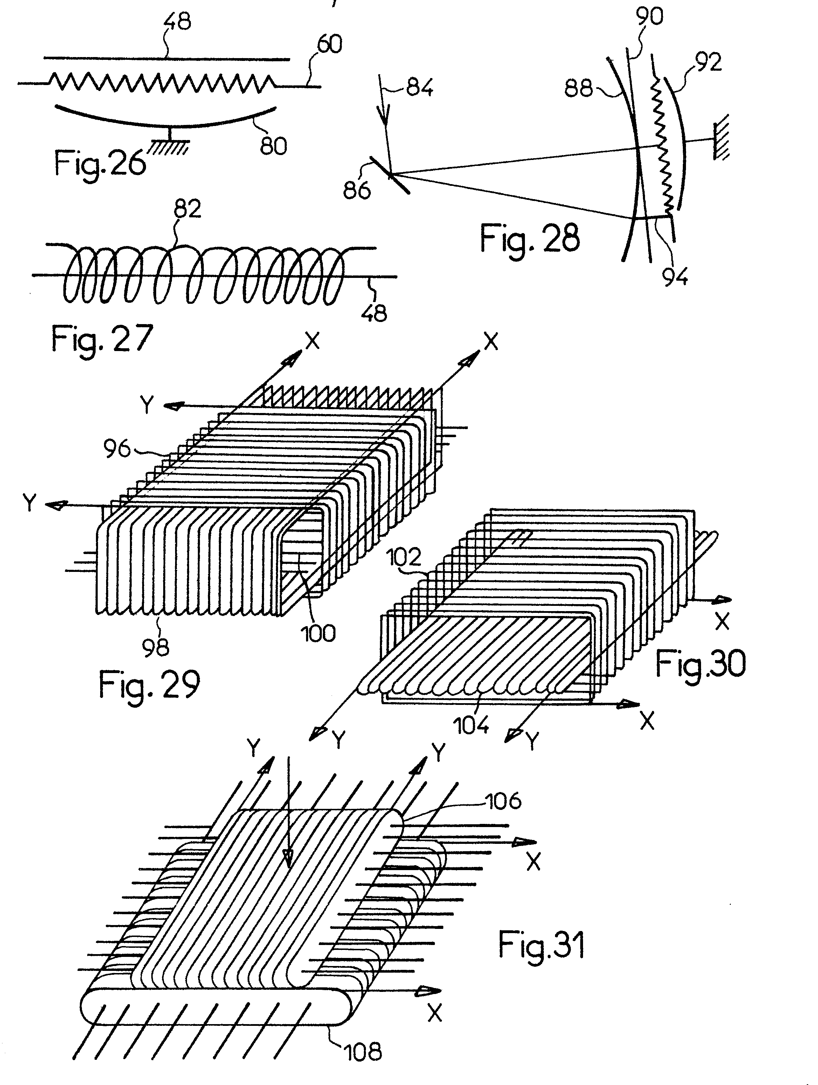

La figure 26 représente le schéma d'un détecteur à blindage de cathode courbe ;

La figure 27 représente une cathode bobinée à pas variable ;

La figure 28 illustre l'application d'un détecteur à blindage courbe pour la correction de l'effet de parallaxe sur un goniomètre de diffraction ;

Les figures 29 à 31 représentent des vues en perspective de trois agencements de détecteurs permettant une détection bi-dimensionnelle d'un rayonnement ;

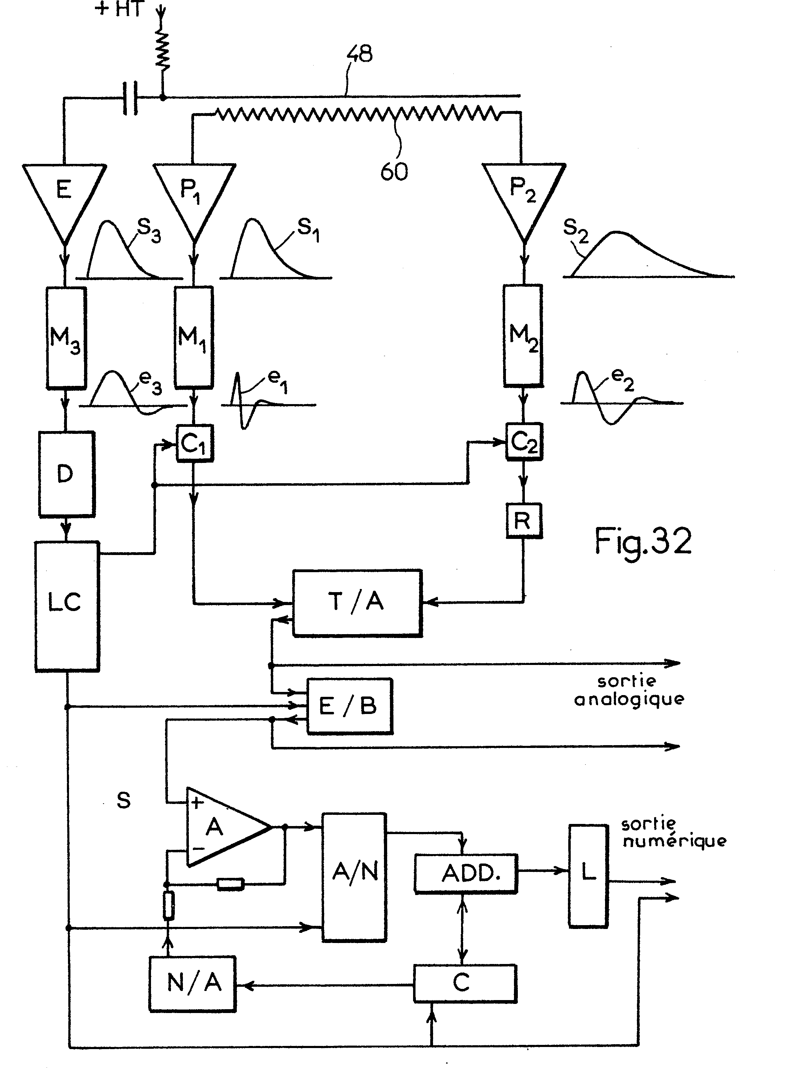

La figure 32 est le schéma électronique synoptique du dispositif de traitement des signaux fournis par le détecteur ;

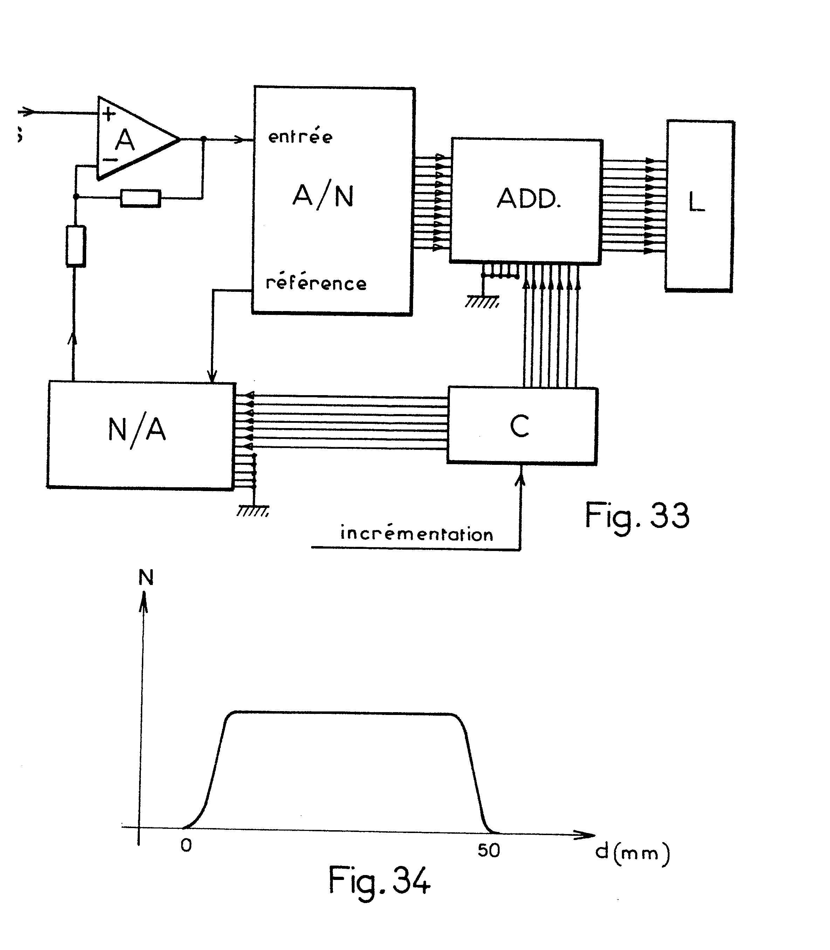

La figure 33 est un montage permettant de corriger les défauts du convertisseur analogique-numérique de la figure 32 ; et

La figure 34 représente la courbe de réponse du compteur selon l'invention.

Les détecteurs à localisation de rayonnement connus ayant déjà été décrits en regard des figures 1 à 7, on passera à présent directement à la description du détecteur selon l'invention.

Le détecteur représenté schématiquement sur la figure 8 comprend, dans son principe, une cathode 30 constituée par un bobinage en fil métallique résistant, traversé dans le sens axial par un fil d'anode 32 qui est relié à la borne positive d'une source de haute tension. On peut également disposer plusieurs fils d'anode à l'intérieur du bobinage. L'ensemble de la cathode et de l'anode est enfermé dans une enceinte 34 (figure 9) remplie d'une atmosphère gazeuse 36 comprenant 90 % de xénon ou d'argon et 10 % de méthane, dans le cas de la détection de photons X.

Lorsqu'un photon pénètre dans l'enceinte à travers une fenêtre 37 prévue à cet effet, il perd de l'énergie par effet Compton et arrache au fur et à mesure de sa progression, plusieurs électrons primaires, chacun de ces derniers arrachant à son tour d'autres électrons. Une impulsion apparaît alors sur la cathode 30 par influence de sorte que l'on peut recueillir à ses extrémités deux signaux $S_1$ et $S_2$ dont la forme ou l'amplitude dépendent du point d'impact du photon sur le fil d'anode, comme on l'expliquera par la suite.

La cellule de détection représentée à la figure 10 comprend une carcasse métallique allongée 38 se terminant à ses extrémités par des portions 40, 42, profilées en I. De part et d'autre des branches centrales desdites portions sont fixés deux supports isolants 44, 46 en forme de demi-cylindres qui présentent sur leur paroi cylindrique un filetage de faible pas. Les supports sont donc parallèles et écartés d'une distance égale à l'épaisseur desdites branches centrales. Dans l'intervalle compris entre les supports est tendu longitudinalement un fil d'anode métallique 48 qui s'accroche par ses extrémités à deux bornes 50, 52 portées respectivement par deux structures isolantes 54, 56, fixées sur lesdites portions terminales 40, 42 de la carcasse. L'une des bornes est reliée à la borne positive d'une source haute tension. Le fil d'anode est tendu par des lames ressorts 58.

Un fil de cathode 60 est bobiné sur les supports 44, 46 en le faisant passer dans les filets successifs du filetage. On obtient de cette manière un bobinage très régulier à spires serrées.

Les extrémités du fil de cathode sont connectées à des bornes 62, 64 auxquelles on recueille les signaux $S_1$ et $S_2$ induits par le fil d'anode 48 lors d'un impact de photon. Etant donné que le fil de cathode 60 entoure complètement le fil d'anode 48, il capte intégralement le signal d'influence induit par ce dernier. Il en résulte que le rapport signal sur bruit des préamplificateurs, obtenu lors du traitement des signaux $S_1$

et $S_2$, est nettement supérieur à celui obtenu avec les détecteurs connus. La résolution est de ce fait également améliorée. De plus, en raison de la faible capacité de la cathode bobinée, on obtient une grande vitesse de comptage.

On obtient des performances analogues au moyen de la cellule de la figure 11, qui comprend une cathode tubulaire 66 dans laquelle est disposé un fil d'anode 68.

Dans les cas où l'on peut se contenter d'une résolution moyenne, la cathode peut se réduire à une portion de tube 69 (figure 12) ou même à une plaque 70 (figure 13).

On donnera à présent un exemple de réalisation de cellule du type représenté à la figure 10.

| | |
|---|---|
| Longueur utile L | 50 mm |
| Epaisseur e de la zone active | 5 mm |
| Hauteur de la fenêtre | 9 mm |
| Diamètre du fil d'anode | 20 μ |
| Diamètre du fil de cathode | 15 μ |
| Pas du bobinage | 200 μ |
| Résistance de la cathode | 85 K Ω |
| Capacité de la cathode | 60 pF |
| Gaz de remplissage | 90 % d'argon et 10 % de méthane. |

La cathode est réalisée en tout matériau susceptible de ne pas s'allonger lors du bobinage, par exemple en un alliage de chrome et de nickel. L'anode peut être réalisée en molybdène ou en tungstène, éventuellement dorés.

La figure 14 représente la résolution spéciale obtenue en un point quelconque A de la cellule, avec une cellule à cathode tubulaire, du type de celle montrée à la figure 10, le détecteur étant placé devant une fente de 50 μ de largeur et de 8 mm de hauteur. La position d du point d'impact sur le fil

d'anode est portée un abscisse et le nombre d'impacts N enregistrés au point considéré est porté en ordonnée. La résolution ainsi obtenue est comprise entre 150 et 250 μ selon la valeur de la pression de remplissage de l'enceinte 36 (figure 9). Cette résolution reste pratiquement uniforme sur une longueur de cellule de 45 mm.

La figure 15 montre la résolution en énergie avec une cellule à cathode tubulaire avec un faisceau diffracté sur un cristal de fluorure de lithium servant de monochromateur. La résolution est de 15 % et cette valeur est constante à moins de 1 % sur une longueur de cellule de 45 mm. La vitesse de comptage maximum est comprise entre 30 000 et 50 000 coups par seconde et le temps mort total électronique comprise est de l'ordre de 10 μs.

Une grande particularité de ce compteur réside dans la très faible variation de la résolution spatiale en fonction de la hauteur du faisceau localisé. Entre 2 et 8 mm de hauteur, la variation est inférieure à 10 %. Ceci est dû à la grande symétrie du compteur et au fait que le faisceau incident est parallèle aux fils de cathode, comme le montre la figure 16. Un faisceau 72 émis par un tube 74 à rayons X est diffracté par un échantillon 76. La référence 78 montre la forme du faisceau diffracté.

Cet avantage est particulièrement intéressant car il détermine les conditions de l'expérience, telles que la durée de la mesure, le flux détecté étant maximum avec une grande hauteur de fente.

On expliquera à présent le mode de détermination de la position du photon X. Tout d'abord on remarquera que la cellule de la figure 10 est assimilable à une ligne à constante répartie, telle que représentée à la figure 17, dans laquelle $r_1$ à $r_n$ sont les résistances des spires de la cathode 60 et $C_1$ à $C_n$ sont les capacités de ces spires par rapport au blindage. La référence 48

0084994

représente le fil d'anode.

Lorsque le nombre de spires est très grand, la somme des capacités $C_1$ à $C_n$ en parallèle tend vers l'infini, de sorte qu'elles peuvent être remplacées par une ligne 80 reliée à la terre, comme le montre la figure 18.

La forme des signaux $S_1$ et $S_2$ recueillis aux extrémités de la cathode 60 dépend de la position de l'impact du photon X. Ainsi, si le photon arrive en A sur la figure 18, le signal $S_1$ aura un temps de montée très faible, tandis que le signal $S_2$ qui aura été intégré par la ligne entre A et C sera très long à monter. Les signaux ainsi recueillis sont respectivement représentés aux figures 19, 20.

Dans le cas où le photon arrive en un point B situé sensiblement au milieu de la longueur de la cellule, les signaux $S_1$ et $S_2$ recueillis aux extrémités de la cathode sont déformés de la même façon et ont l'allure représentée aux figures 21, 22.

Enfin, si le photon tombe en C situé à l'autre extrémité de la cellule, on obtiendra les mêmes signaux que dans le cas où l'impact était en A mais, les signaux $S_1$ et $S_2$ sont échangés.

Au moyen d'un système de traitement classique, on réalise la mise en forme des signaux $S_1$ et $S_2$ de la figure 23 par double différentiation, ce qui permet d'obtenir les signaux $e_1$ et $e_2$ représentés aux figures 24, 25. La différence $t_2-t_1$ entre les temps de passage à zéro des signaux $e_2$ et $e_1$ représente l'information de position du rayonnement détecté.

La figure 26 montre le schéma électrique équivalent d'une cellule de détection dans laquelle le blindage 80 a une forme incurvée de façon convenable pour faire varier la capacité répartie de la cellule, en vue de corriger une erreur de linéarité de la courbe de réponse de la cellule ou d'obtenir une courbe de réponse désirée.

On peut également corriger la courbe de réponse en utilisant une cathode bobinée à pas variable 82, comme le montre la figure 27, ou encore en faisant varier la résistance de la couche conductrice, lorsque le détecteur est ainsi réalisé.

Ces procédés de correction peuvent être mis en oeuvre pour corriger l'effet de parallaxe sur un goniomètre de diffraction en donnant au détecteur un pseudo-rayon de courbure, comme le montre la figure 28. Un faisceau 84 de rayons X est diffracté par un échantillon 86 suivant un cercle goniomètrique 88 tangent au fil d'anode 90 du détecteur. On donne au blindage 92 de ce dernier une courbure calculée pour que la parallaxe 94 soit corrigée.

Il va de soi que le détecteur selon l'invention peut être également utilisé pour la détection de rayonnements β et de neutrons, seule la nature du gaz détecteur changeant dans les deux cas.

On décrira à présent trois réalisations particulières de détecteurs bi-dimensionnels.

Dans le mode de réalisation de la figure 29, deux cathodes bobinées 96, 98 sont emboîtées l'une dans l'autre, de façon que les plans de leurs spires soient perpendiculaires. Une nappe de fils d'anode 100 est placée à l'intérieur de la cathode interne 98. Les signaux correspondant aux deux dimensions sont recueillis aux bornes X, Y des cathodes.

Le détecteur bi-dimensionnel représenté sur la figure 30 comprend une seule cathode bobinée 102 et une anode 104 également bobinée mais de structure très aplatie. L'anode est insérée dans la cathode de manière que ses spires soient perpendiculaires à celles de la cathode. L'anode est portée au potentiel positif de la haute tension. Le photon est repéré suivant un axe X par la cathode et suivant l'axe Y par l'anode. En variante, l'anode peut être remplacée par un fil résistant métallique replié en zig-zag.

Le détecteur bi-dimensionnel de la figure 31 comprend deux cellules élémentaires superposées et orientées de manière que les spires de leur cathode respective 106, 108 soient perpendiculaires entre elles. En effet, étant donné que la détection du photon se fait par effet Compton, c'est-à-dire par perte d'énergie le long du trajet du photon, celui-ci après avoir traversé la première cellule 106 a encore de l'énergie pour produire un signal dans la seconde cellule 108. On peut ajuster l'épaisseur de chaque cellule pour que le signal électrique soit équivalent dans chaque cellule. Si la surface désirée est importante, il sera nécessaire de disposer plusieurs fils d'anode dans chaque cellule pour assurer un champ électrique suffisant pour les photons détectés dans la région des bords.

On décrira à présent, en regard des figures 32 et 33 le schéma du montage électronique d'un dispositif de traitement des signaux fournis par le détecteur selon l'invention.

Avec référence à la figure 32, le signal issu du fil d'anode 48 est amplifié par un préamplificateur E, puis mis en forme par le dispositif de mise en forme $M_3$ par double différentiation et intégration du signal $S_3$ fourni par le préamplificateur E. On obtient alors le signal $e_3$. Celui-ci passe ensuite dans le circuit de discrimination en énergie D.

Les signaux issus des extrémités de la cathode 60 sont amplifiés par les préamplificateurs $P_1$ et $P_2$ qui fournissent les signaux $S_1$ et $S_2$. Ces signaux sont mis en forme par double différentiation dans les dispositifs $M_1$ et $M_2$. Le passage à zéro des signaux $e_1$ et $e_2$ issus de $M_1$ et $M_2$ est detecté par les comparateurs $C_1$ et $C_2$. Le signal issu du comparateur $C_2$ est retardé par le circuit R.

Le signal fourni par $C_1$ déclenche un convertisseur temps-amplitude T/A tandis que le signal issu de R arrête ledit convertisseur. On obtient alors en sortie de ce dernier une amplitude représentant la position du photon X détecté par le compteur.

Un échantillonneur-bloqueur E/B permet de prélever la valeur contenue dans le convertisseur T/A afin de libérer celui-ci. Un convertisseur analogique-numérique A/N convertit la valeur contenue dans l'échantillonneur-bloqueur en une valeur numérique qui représente également la position du photon X dans le compteur.

Le signal issu du circuit de discrimination D est reçu par une logique de coordination LC dont la sortie est connectée à l'échantillonneur-bloqueur E/B et au convertisseur analogique-numérique A/N. Ladite logique permet de synchroniser l'ensemble, et en particulier elle norme le temps mort du système à une valeur fixe (depuis l'apparition de l'impulsion d'anode jusqu'au transfert du convertisseur temps-amplitude T/A dans l'échantillonneur-bloqueur E/B). Ceci a pour effet d'obtenir, sur toute la longueur de la cellule, une densité de probabilité de traitement égale, pour chaque évènement traité, et par conséquent une courbe de réponse rectiligne. La courbe de réponse du compteur à l'allure représentée sur la figure 34, sur laquelle la longueur de la cellule est portée en abscisses et le nombre de coups N par seconde, en ordonnées.

La figure 33 explicite de façon plus détaillée la partie inférieure du schéma de la figure 32. Le convertisseur analogique-numérique A/N à approximations successives, s'il permet une grande rapidité, présente par contre un grave inconvénient quant à la qualité de la courbe obtenue. Ceci est dû à l'inégalité des marches du convertisseur. Dans un convertisseur A/N à 4096 marches (12 bits), ces défauts se manifestent principalement aux points de recoupement des marches suivantes : (2047, 2048), (1023, 1024), (511, 512), (255, 256), (127, 128), etc....

Le schéma montré à la partie inférieure de la figure 32 et de façon plus détaillée à la figure 33 permet de remédier à cet inconvénient, de sorte qu'il devient possible de concilier la rapidité des convertisseurs à approximations successives et la grande qualité de la répartition statistique des points de la courbe. On notera que ce montage n'est valable que pour un cumul statistique. Sur ce schéma, un compteur binaire C connecté à la logique de coordination LC, est incrémenté après chaque évènement. Ce compteur est relié à un convertisseur-numérique-analogique N/A, de sorte qu'il peut traduire la valeur qu'il contient en une tension proportionnelle à cette valeur.

Le compteur C est également relié à un additionneur binaire ADD, de sorte qu'il permet d'additionner la valeur qu'il contient à celle donnée par le convertisseur analogique-numérique A/N qu'il s'agit de corriger. La tension de sortie du convertisseur numérique-analogique N/A est soustraite par un amplificateur différentiel A au signal à mesurer S; il en résulte que la valeur analogique soustraite à l'entrée au signal à mesurer S est additionnée en binaire en sortie du convertisseur analogique-numérique A/N par l'additionneur ADD. Il convient d'ajuster le gain de l'amplificateur différentiel A pour que la valeur soustraite soit égale à la valeur ajoutée en sortie par l'additionneur.

Un tel système permet pour une même amplitude de signal à mesurer d'utiliser des points de mesure différents du convertisseur analogique-numérique A/N et, par conséquent, l'histogramme réalisé ne sera entaché des erreurs dudit convertisseur que dans le rapport $\frac{e}{N}$, e étant l'erreur différentielle maximum avant la correction et N le nombre de points parcourus par le compteur sur l'échelle du convertisseur analogique digital.

Si on prend N = 128 (compteur 7 bits) et e = 0,5 du bit le moins significatif, on aura $\frac{e}{N} = \frac{1}{256}$ du bit le moins significatif, ce qui représente une erreur située à l'intérieur de celle due au cumul statistique, elle-même égale à $\sqrt{N}$, ce qui est le but recherché.

-16-

Il va de soi que des modifications de détail soient apportées aux modes de réalisation décrits sans sortir pour autant du cadre de l'invention. Par exemple au lieu d'obtenir la localisation par la mesure de la phase de signaux $S_1$, $S_2$ on peut également atteindre ce résultat par division de la charge entre les deux extrémités de la cathode suivant la formule $p = \dfrac{s_1}{s_1 + s_2}$ .

$s_1$ et $s_2$ étant les valeurs crêtes des signaux $S_1$ et $S_2$ et $\underline{p}$ caractérisant la position du point d'impact.

REVENDICATIONS

1.- Détecteur à localisation de rayonnement électromagnétique, du type comportant au moins un fil d'anode (32,48) et une cathode (30,60) de forme appropriée, tous deux plongés dans une atmosphère gazeuse qui constitue l'élément détecteur de rayonnement, caractérisé en ce que la cathode entoure au moins partiellement le fil d'anode et est résistante de manière à former avec ce dernier une ligne à résistance et capacité réparties.

2.- Détecteur selon la revendication 1, caractérisé en ce que la cathode est constituée par un bobinage en fil résistant métallique (60), qui est traversé axialement par le fil d'anode (48).

3.- Détecteur selon la revendication 2, caractérisé en ce que le fil est choisi avec un très faible diamètre par rapport au pas du bobinage.

4.- Détecteur selon l'une des revendications 2 et 3, caractérisé en ce qu'il comprend deux support isolants (44, 46) en forme de demi-cylindres, pourvus sur leur paroi cylindrique d'un filetage de pas correspondant à celui désiré pour le bobinage, lesdits supports étant fixés par leurs extrémités sur une carcasse de montage (40) qui les maintient écartés et parallèles, avec leur paroi cylindrique tournée vers l'extérieur, le fil de cathode (60) étant bobiné autour du filetage desdits supports et le fil d'anode étant tendu à l'intérieur du bobinage, entre deux bornes portées par la carcasse.

5.- Détecteur selon la revendication 1, caractérisé en ce que la cathode est constituée par une surface tubulaire résistive (66), à l'intérieur de laquelle passe axialement le fil d'anode.

6.- Détecteur selon la revendication 1, caractérisé en ce que la cathode est en forme de surface tubulaire ouverte (69).

7.- Détecteur selon la revendication 1, caractérisé en ce que la cathode est en forme de surface plane (70).

8.- Détecteur selon l'une des revendications précédentes, caractérisé en ce que la capacité répartie le long du détecteur est variable selon une fonction prédéterminée, de manière à obtenir une correction de la courbe de réponse du détecteur ou une courbe de réponse désirée.

9.- Détecteur selon la revendication 8, caractérisé en ce que le bobinage de la cathode (82) a un pas variable (figure 27).

10.- Détecteur selon la revendication 8, caractérisé en ce que la couche conductrice formant cathode a une résistance variable.

11.- Détecteur selon la revendication 8, caractérisé en ce que le blindage (80) de la cathode est incurvé (figure 26).

12.- Détecteur selon l'une des revendications 1 à 4, appliqué à la détection bi-dimensionnelle d'un rayonnement électromagnétique, caractérisé en ce qu'il comprend deux cathodes bobinées (96, 98) disposées à 90° l'une par rapport à l'autre et emboîtées l'une dans l'autre, une nappe de fils d'anodes (100) étant placée à l'intérieur du bobinage intérieur, les signaux correspondant aux deux dimensions étant recueillis aux bornes des cathodes.

13.- Détecteur selon l'une des revendications 1 à 4, pour la détection bi-dimensionnelle, caractérisé en ce qu'il comprend une cathode bobinée (102) dans laquelle est emboîtée perpendiculairement une anode (104) également bobinée selon une structure aplatie et portée au potentiel positif de la haute tension, le photon étant repéré suivant un axe par la cathode et suivant l'autre axe par l'anode.

14.- Détecteur selon l'une des revendications 1 à 4, pour la détection bi-dimensionnelle, caractérisé en ce qu'il comprend deux cathodes élémentaires (106, 108) superposées et orientées perpendiculairement l'une par rapport à l'autre, chacune d'elles recevant une nappe de fils d'anodes.

15.- Dispositif pour le traitement des signaux fournis par le détecteur selon l'une des revendications précédentes, du type comprenant deux circuits de traitement des signaux recueillis aux extrémités de la cathode, chacun d'eux comprenant en série un préamplificateur $(P_1, P_2)$, un circuit de mise en forme $(M_1, M_2)$, un comparateur $(C_1, C_2)$ destiné à détecter le passage à zéro du signal $(e_1, e_2)$ issu du circuit de mise en forme, le signal $(e_1)$ issu de l'un des comparateurs étant utilisé pour déclencher un convertisseur temps-amplitude (T/A) et le signal $(e_2)$ issu de l'autre comparateur étant retardé par un circuit de retard (R) qui fournit un signal qui bloque ledit convertisseur, la sortie de ce dernier étant reliée à un échantillonneur-bloqueur (E/B) qui fournit une valeur analogique, laquelle est transformée en valeur numérique par un convertisseur analogique-numérique (A/N), caractérisé en ce qu'il comprend un circuit de traitement de signal fourni par le fil d'anode, ledit circuit comprenant en série un préamplificateur (E), un circuit de mise en forme $(M_3)$ destiné à effectuer la double différentiation du signal issu du préamplificateur, un circuit de discrimination en énergie (D) et une logique de coordination (LC) dont la sortie est reliée à l'échantillonneur-bloqueur (E/B) et au convertisseur analogique-numérique (A/N).

16.- Dispositif selon la revendication 15, caractérisé en ce qu'il comporte en outre un compteur binaire (C) susceptible d'être incrémenté à chaque impact de photon, ledit compteur étant relié d'une part audit convertisseur analogique-numérique (A/N) par l'intermédiaire d'une boucle comprenant en série un convertisseur numérique-analogique (N/A) et un amplificateur différentiel (A) et d'autre part à un additionneur binaire (ADD), le gain de l'amplificateur différentiel étant réglé pour que la valeur qu'elle soustrait au signal à mesurer (S) qui est issu de l'échantillonneur-bloqueur (E/B) soit égale à la valeur ajoutée par l'additionneur (ADD).

17.- Dispositif selon l'une des revendications 15 et 16, caractérisé en ce qu'il permet de déterminer la localisation du point d'impact par division de la charge entre les extrémités de la cathode, suivant la formule $p = \dfrac{s_1}{s_1 + s_2}$ , $s_1$ et $s_2$ étant les valeurs des crêtes des signaux $S_1$ et $S_2$ recueillis aux extrémités de la cathode et p caractérisant la position du point d'impact.

0084994

HT+

A

C

12

10

S₁

S₂

**Fig.1**

S₁

**Fig.2**

t

S₂

**Fig.3**

t

$14_1$  $14_2$  $14_3$

$14_n$

HT+

13

**Fig.4**

16

S₁

**Fig.6**

t

**Fig.7**

S₂

t

24  20

S₂

S₁

18

26  **Fig.5**  22

Fig.8

Fig.9

Fig.10

Fig.11

Fig.12

Fig.13

3 / 7

0084994

Fig.14

150 à 200 µ

d en µ

Fig.15

15 %

Energie

Fig.17

Fig.16

Fig.18

4/7

0084994

Fig. 19

Fig. 20

Fig. 21

Fig. 22

Fig. 23

Fig. 24

Fig. 25

0084994

5/7

Fig. 26

Fig. 28

Fig. 27

Fig. 29

Fig. 30

Fig. 31

Fig.32

0084994

Fig. 33

Fig. 34